# EUROPEAN PATENT APPLICATION

(11) **EP 2 947 964 A2**
(43) Date of publication of application: **25.11.2015**
(21) Application number: 15167524.6
(22) Date of filing: 13.05.2015
(51) Int. Cl.: H05B 33/08, H05B 37/02

(54) **DEVICE FOR DRIVING LIGHT EMITTING DIODE MODULE AND METHOD FOR DRIVING LIGHT EMITTING DIODE MODULE**

(30) Priority: 15.05.2014 KR 20140058535; 28.11.2014 KR 20140168848
(71) Applicant: Samsung Electro-Mechanics Co., Ltd., Suwon-si, Gyeonggi-do 443-743 (KR)
(72) Inventor: RYU, Byoung Woo, 443-743 Gyeonggi-Do (KR)
(74) Representative: Grünecker Patent- und Rechtsanwälte PartG mbB

(57) **Abstract**

A device for driving a light emitting diode (LED) module is disclosed, wherein alternating current (AC) power is rectified and applied to an LED module and brightness of the LED module is adjusted by adjusting the maximum value of an LED current passing through the LED module, thereby achieving natural brightness adjustment. The device for driving an LED module may include a driver, a control signal receiver, a control signal converter, and a linear circuit.

## Description

### CROSS REFERENCE TO RELATED APPLICATION

This application claims the benefit of Korean Patent Application Nos. 10-2014-0058535 and 10-2014-0168848, filed respectively on May 15, 2014 and November 28, 2014, which are hereby incorporated herein by reference for all purposes.

### BACKGROUND

### Field

The following description relates to a device for driving a light emitting diode module and a method for driving a light emitting diode module.

### Description of the Related Art

As demand for light emitting diodes (hereinafter, referred to as an 'LED') continues to increase due to high efficiency, low power characteristics, and the like, various types of illumination devices using such LEDs are being increasingly developed and deployed.

Typically, most of the general LED illumination devices according to the related art each require inclusion of a transformer for power conversion, a power factor corrector (PFC) for improving a power factor, a means for reducing electro magnetic interference (EMI), and the like. In particular, an LED illumination device that operates by receiving alternating current (AC) rather than direct current (DC) power generally requires an AC/DC converter.

However, the transformer, the PFC, the EMI reducing means, and the like occupy a large volumetric footprint and are relatively expensive and thus have limitations in terms of miniaturization of the LED illumination devices and reduction of manufacturing costs.

Research on an AC-direct-type LED illumination device has been conducted as an alternative to the LED illumination devices in the related art. However, the AC-direct-type LED illumination devices have a problem in that it is difficult to adjust brightness by a digital signal and brightness adjustment is not natural.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect a device for driving an LED module achieves a natural brightness adjustment even while being driven by an AC-direct method.

Another aspect of the present invention may provide a device for driving an LED module which adjusts brightness by receiving a command from a user, a program, a sensor, and the like, and can reduce a total harmonic distortion phenomenon.

Still another aspect of the present invention may provide a device for driving an LED module which is advantageous in terms of miniaturization and reduction of manufacturing costs.

One aspect of the present invention may provide a method for driving an LED module which can achieve natural brightness adjustment even while being driven by an AC-direct method.

Another aspect of the present invention may provide a method for driving an LED module which adjusts brightness by receiving a command from a user, a program or the like and can reduce a total harmonic distortion phenomenon.

Technical problems to be achieved in the present invention are not limited to the aforementioned technical problem, and other technical problems, which are not mentioned above, may be clearly understood by those skilled in the art from the following descriptions.

In one general aspect, there is provided a device for driving an LED module, wherein AC power supplied by a power supply unit is rectified by a rectification unit and then supplied to a driving unit, and the driving unit adjusts brightness of an LED module by adjusting an LED current.

The driving unit may adjust an LED current according to a command related to brightness of the LED module.

The driving unit may include a control signal receiver for receiving a control signal to which the command related to the brightness of the LED module is transmitted in a wireless communication manner. Here, the control signal receiver may output a pulse width modulation (PWM) signal, wherein the PWM signal may be converted into an analog value and supplied to a driver.

Further, power for operating the control signal receiver may be supplied through a linear circuit included inside the driving unit.

According to an aspect, a beneficial effect of adjusting brightness of an LED even while driving the LED by rectified AC power may be provided.

Moreover, a natural brightness adjustment may be achieved even while driving an LED module without conventionally required parts included in the device for driving an LED module according to the related art, such as a transformer for power conversion, a power factor corrector (PFC) for improving a power factor, a means for reducing electro magnetic interference (EMI), and the like, which is advantageous in terms of miniaturization and reduction of manufacturing costs.

In addition, an operational state of an LED module may be achieved by receiving a control signal for controlling an on state, off state, a brightness, and the like in a wired or wireless communication manner and reduce a total harmonic distortion phenomenon.

In one general aspect, a device for driving a light emitting diode (LED) module directly by an alternating current (AC), wherein AC power is rectified to be applied to the LED module and a brightness of the LED module is adjusted by adjusting a maximum value of an LED current passing through the LED module.

The device for driving an LED module may include a driving unit for receiving a control signal determining an on, an off, and/or a brightness state of the LED module through wired communication or wireless communication and adjusting the LED current according to the control signal.

The device may include: a control signal receiver configured to receive the control signal; and a driver configured to adjust the LED current according to a dimming control signal according to the control signal.

The control signal receiver may output a pulse width modulation (PWM) signal and the driving unit may further comprise a control signal converter for converting the PWM signal into an analog voltage value, and the dimming control signal may include the analog voltage value.

The driving unit may further comprise a linear circuit configured to supply power for driving the control signal receiver.

The linear circuit may be configured to convert the power of the driving unit into DC power and supply the DC power to the control signal receiver.

The driver, the linear circuit, and the control signal converter may be provided in a single integrated circuit and the control signal receiver may be provided outside the integrated circuit.

The driving unit may further comprise a bias unit for supplying a bias voltage to the linear circuit, wherein the bias unit is provided in the integrated circuit.

The driving unit may further comprise a bias unit for supplying a bias voltage to the linear circuit.

The driving unit may further comprise a linear circuit for supplying power for driving the control signal receiver.

In another general aspect, a device for driving a light emitting diode (LED) module includes a power supply unit configured to supply alternating current (AC) power; a rectification unit connected to the power supply unit configured to rectify the AC power; and a driving unit connected to the rectification unit configured to supply an LED voltage and an LED current to an LED module, wherein the driving unit receives a command related to brightness of the LED module to adjust the brightness of the LED module responsive to the command.

The driving unit may include a driver configured to adjust the brightness of the LED module by adjusting the maximum value of the LED current.

The driver may include: a reference voltage setting unit configured to generate a reference voltage adaptively varied according to a command related to the brightness of the LED module; and a balancing driver connected to the LED module, the reference voltage setting unit being configured to adjust the LED current according to the reference voltage.

The reference voltage setting unit may be configured to receive a dimming control signal adaptively varied according to a command related to the brightness of the LED module and output a plurality of reference voltages having different values, respectively.

The reference voltage setting unit may include: a first comparator having a first terminal configured to receive the dimming control signal and an output terminal connected to a second terminal; a first dividing resistor having one end connected to the output terminal of the first comparator; and a second dividing resistor having one end connected to the other end of the first dividing resistor.

The LED module may include a plurality of LED channels which are connected to each other in series and the balancing driver comprises: at least one first driving comparator having a first terminal connected to the other end of the first dividing resistor; at least one second driving comparator having a first terminal connected to an output terminal of the first comparator; a first transistor having a control terminal connected with an output terminal of the first driving comparator, a first terminal connected to an output terminal of an LED channel which is selected from the plurality of LED channels, and a second terminal connected to one end of a sensing resistor; and a second transistor having a control terminal connected with an output terminal of the second driving comparator, a first terminal connected to an output terminal of another LED channel which is selected from the plurality of LED channels, and a second terminal connected to one end of a sensing resistor.

The LED module may include a plurality of LED channels which are connected to each other in series and the balancing driver comprises a plurality of driving comparators, a plurality of transistors, and a sensing resistor.

The driving unit may further comprise a control signal receiver configured to receive a control signal including a command related to brightness of the LED module.

The control signal receiver may be configured to output a pulse width modulation (PWM) signal by receiving the control signal in a wired communication or wireless communication manner and the driving unit further comprises a control signal converter configured to convert the PWM signal into a dimming control signal.

The driving unit may further include a linear circuit configured to supply power for driving the control signal receiver.

The linear circuit may include: a transistor having a first terminal receiving power and a second terminal connected to one end of a first resistor; a comparator having a first terminal receiving a bias voltage and an output terminal connected to a control terminal of the transistor; a second resistor having one end connected to a second terminal of the transistor; and a third resistor having one end connected to the other end of the second resistor, wherein the other end of the second resistor is connected to a second terminal of the comparator.

At least one of the comparator of the linear circuit, the second resistor, and the third resistor may be provided in a single integrated circuit with the driver, the transistor and the first resistor may be provided outside the integrated circuit, and the control signal receiver may be provided outside the integrated circuit.

In another general aspect, the device for driving a light emitting diode (LED) module includes an LED module including a first LED channel, a second LED channel, a third LED channel, and a fourth LED channel which are connected to each other in series and configured to receive an LED voltage and an LED current at one end of the first LED channel; and a driver for receiving a dimming control signal and adjusting the LED current to adjust brightness of the LED module, wherein the dimming control signal is an analog voltage value in proportion to the brightness of the LED module.

The device may further include: a control signal receiver configured to receive a control signal including a command related to brightness of the LED module and outputting a pulse width modulation (PWM) signal; and a control signal converter for converting the PWM signal into the dimming control signal.

The driver may include: a reference voltage setting unit configured to receive the dimming control signal and outputting a plurality of reference voltages; and a balancing driver connected to the LED module and the reference voltage setting unit to adjust the LED current according to the plurality of reference voltages, wherein the sizes of the plurality of reference voltages may be different from each other and proportionate to the size of the dimming control signal.

The balancing driver may include: a sensing resistor having one end connected to the fourth LED channel and the other end grounded; a first transistor having a first terminal connected to the other end of the first LED channel; a second transistor having a first terminal connected to the other end of the second LED channel; a third transistor having a first terminal connected to the other end of the third LED channel; a fourth transistor having a first terminal connected to the other end of the fourth LED channel; a first driving comparator having an output terminal connected to the first transistor; a second driving comparator having an output terminal connected to the second transistor; a third driving comparator having an output terminal connected to the third transistor; and a fourth driving comparator having an output terminal connected to the fourth transistor, wherein second terminals of the first transistor, the second transistor, the third transistor, and the fourth transistor are connected to one end of the sensing resistor, inverting terminals of the first driving comparator, the second driving comparator, the third driving comparator, and the fourth driving comparator are connected to one end of the sensing resistor, and non-inverting terminals of the first driving comparator, the second driving comparator, the third driving comparator, the fourth driving comparator receive one of the plurality of reference voltages.

The reference voltage setting unit may include: a first comparator having a first terminal receiving the dimming control signal and an output terminal connected to a second terminal; a first dividing resistor having one end connected to the output terminal of the first comparator; and a second dividing resistor having one end connected to the other end of the first dividing resistor, wherein non-inverting terminals of the first driving comparator and the second driving comparator may be connected to one end of the second dividing resistor, and non-inverting terminals of the third driving comparator and the fourth driving comparator may be connected to an output terminal of the first comparator.

The reference voltage setting unit may include: a first comparator having a first terminal receiving the dimming control signal and an output terminal connected to a second terminal; a first dividing resistor having one end connected to the output terminal of the first comparator; and a second dividing resistor having one end connected to the other end of the first dividing resistor.

The balancing driver may include: a sensing resistor having one end connected to the fourth LED channel and the other end grounded; a first transistor having a first terminal connected to the other end of the first LED channel; a second transistor having a first terminal connected to the other end of the second LED channel; a third transistor having a first terminal connected to the other end of the third LED channel; a fourth transistor having a first terminal connected to the other end of the fourth LED channel; a first driving comparator having an output terminal connected to the first transistor; a second driving comparator having an output terminal connected to the second transistor; a third driving comparator having an output terminal connected to the third transistor; and a fourth driving comparator having an output terminal connected to the fourth transistor, wherein second terminals of the first transistor, the second transistor, the third transistor, and the fourth transistor are connected to one end of the sensing resistor, inverting terminals of the first driving comparator, the second driving comparator, the third driving comparator, and the fourth driving comparator connected to one end of the sensing resistor, and non-inverting terminals of the first driving comparator and the second driving comparator connected to one end of the second dividing resistor, and non-inverting terminals of the third driving comparator and the fourth driving comparator connected to an output terminal of the first comparator.

The device may further include: a linear circuit configured to supply power for driving the control signal receiver, wherein the linear circuit includes: a transistor having a first terminal receiving power and a second terminal connected to one end of a first resistor; a comparator having a first terminal receiving a bias voltage and an output terminal connected to a control terminal of the transistor; a second resistor having one end connected to a second terminal of the transistor; and a third resistor having one end connected to the other end of the second resistor, wherein the other end of the second resistor may be connected to a second terminal of the comparator.

The driver, the control signal converter, and the linear circuit may be provided in one integrated circuit and the control signal receiver may be provided outside the integrated circuit.

The transistor of the linear circuit may be provided outside the integrated circuit.

In another general aspect, a method for driving a light emitting diode (LED) module directly by an alternating current (AC), wherein AC power is rectified and applied to an LED module, and brightness of the LED module is adjusted by adjusting the maximum value of an LED current passing through the LED module.

The method may further include: receiving a control signal including a command related to brightness of the LED module and outputting the control signal as a pulse width modulation (PWM) signal; converting the PWM signal into an analog voltage value; and adjusting the maximum value of the LED current so as to be proportionate to the analog voltage value.

The method may further include: receiving a control signal including a command related to brightness of the LED module and outputting the control signal as a PWM signal; converting the PWM signal into an analog voltage value; and adjusting the maximum value of the LED current so as to be proportionate to the analog voltage value.

In another general aspect, a method for directly driving a light emitting diode (LED) module with alternating current (AC), includes establishing an AC power supply coupled via a rectifier to an LED module, the LED module including a plurality of selectively addressable LEDs; rectifying an AC power according to a predetermined frequency; supplying the rectified AC power to the LED module; and, selectively actuating a predetermined number of the LEDs in the LED module according to a magnitude of the voltage of the AC power.

The method may further include adaptively modulating a current supplied to the LED module to control a brightness of the LEDs.

The AC power may be operationally coupled to the LED module without a transformer, a power factor corrector, and/or measures for electromagnetic interference (EMI) remediation coupled therebetween.

Other features and aspects will be apparent from the following detailed description, the drawings, and the claims.

### BRIEF DESCRIPTION OF THE DRAWINGS

These and/or other aspects and advantages of the present general inventive concept will become apparent and more readily appreciated from the following description, taken in conjunction with the accompanying drawings of which:
FIG. 1 is a diagram schematically illustrating an example of a device for driving an LED module;
FIG. 2 is a diagram for describing an exemplary operating principle of a device for driving an LED module;
FIG. 3 is a diagram for describing a driver of a device for driving an LED module;
FIG. 4 is a diagram for describing a driving unit of the device for driving an LED module;
FIGS. 5A to 5C are diagrams for describing an operating principle of the device for driving an LED module, in which FIG. 5A illustrates a waveform of an LED current when a duty ratio of a PWM signal is 100%, FIG. 5B illustrates a waveform of an LED current when a duty ratio of a PWM signal is 50%, and FIG. 5C illustrates a waveform of an LED current when a duty ratio of a PWM signal is 20%;
FIG. 6 is a diagram schematically illustrating an example in which a device for driving an LED module is implemented;
FIG. 7 is a diagram schematically illustrating an example in which a device for driving an LED module in accordance with the embodiment of the present invention is implemented; and
FIG. 8 is a diagram for describing an operating principle of an exemplary device for driving an LED module in accordance with the embodiment of the present invention when the LED module includes eight LED channels.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

Terms used in the present specification are simply used to describe certain embodiments and are not intended to limit the present invention. Throughout this specification, the singular form includes the plural form unless the context clearly indicates otherwise. Terms "comprises" and/or "comprising" used herein do not preclude existence and addition of one or more other components, steps, operations and/or devices, in addition to the above-mentioned component, step, operation and/or device.

Further, for simplicity and clarity of illustration, the drawing figures illustrate an exemplary general manner of construction, and detailed descriptions of well-known features and techniques may be omitted to avoid unnecessarily obscuring the description. Additionally, elements in the drawing figures are not necessarily drawn to scale. For example, the dimensions of some of the elements in the figures may be exaggerated relative to other elements in the figures to help improve understanding of embodiments of the present invention. The same reference numerals in different figures denote the same elements and in some cases, similar reference numerals may denote similar elements.

The terms "first," "second," "third," "fourth," and the like in the specification and in the claims, if any, are used for distinguishing between similar elements and not necessarily for describing a particular sequential or chronological order. It is to be understood that the terms so used are interchangeable under appropriate circumstances such that the embodiments of the present invention described herein are, for example, capable of operation in sequences other than those illustrated or otherwise described herein. Similarly, when it is described that a method includes a series of steps herein, an order of the steps disclosed herein is not necessarily an order by which such steps may be performed, and any described step may be omitted and/or any other step, which is not mentioned herein, may be added to the method.

The terms "left," "right," "front," "back," "top," "bottom," "over," "under," and the like in the specification and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "connected" as used herein is defined as being directly or indirectly connected in an electrical or non-electrical manner. Here, objects described to be "adjacent" to each other may refer to objects which are in physical contact with each other, close to each other, or present within the same general range or area, appropriately from the context having the phrase. Hereinafter, an exemplary configuration and an operational effect of the present invention will be described in more detail with reference to the accompanying drawings.

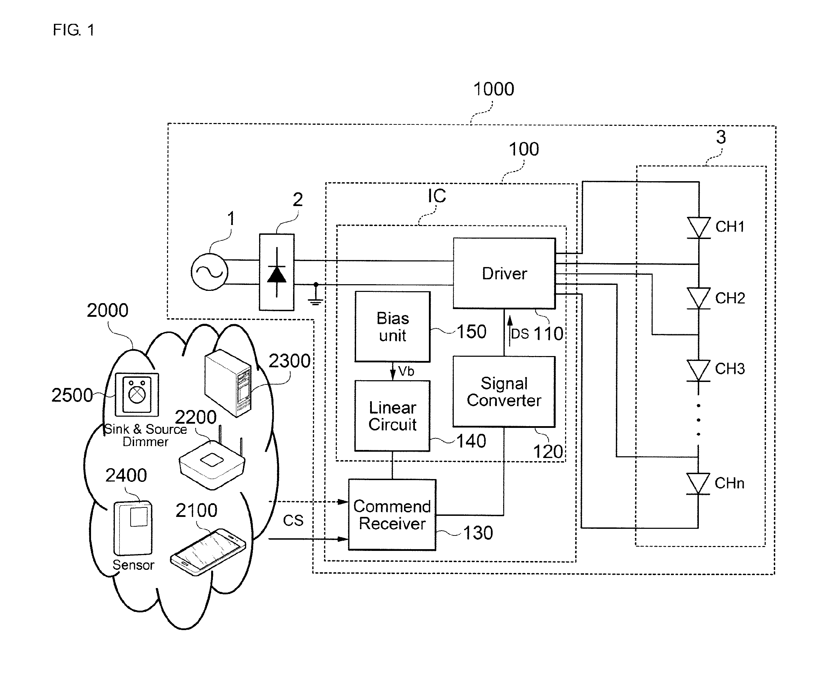

Referring to FIGS. 1 to 4, an LED module driving device 1000 includes a power supply unit, a rectification unit, a driving unit 100, and an LED module 3.

The power supply unit supplies AC power. The power supply unit may be implemented by a power supply such as a home power supply or an industrial power supply. The rectification unit 2 is provided between the power supply unit 1 and the driving unit 100 and rectifies AC power to supply the rectified AC power to the driving unit 100. As an example, the rectification unit may be implemented by a general bridge diode or the like.

The driving unit 100 is provided between the rectification unit and the LED module 3 and drives the LED module 3 by using the power received from the rectification unit. Here, the power supplied to the LED module 3 includes an LED voltage and an LED current, and the driving unit 100 receives power from the rectification unit to output the LED voltage and the LED current, thereby driving the LED module 3.

Meanwhile, at least one of the magnitude and the phase of the LED voltage may be the same as that of a voltage of the power output from the rectification unit. That is, in an example embodiment, the driving unit 100 allows the voltage of the power output from the rectification unit to pass as it is, substantially unchanged, and be applied to the LED module 3.

In contrast, the LED current is adjusted by the driving unit 100.

In an embodiment, the driving unit 100 includes a driver 110. The driver 110 serves to drive the LED module 3 by an AC direct method.

In an embodiment, the driving unit 100 may include a control signal receiver (or command receiver) 130. Further, the driving unit 100 may further include a control signal converter 120 and a linear circuit 140 for supplying power to the control signal receiver 130.

The control signal receiver 130 receives a control signal CS in a wired or wireless manner from various types of control signal generation devices such as a cellphone 2100, sensor 2400, dimmer 2200, 2500, computer 2300, remote control device, or other device employing for example: WiFi, Zigbee, Bluetooth, Infrared, visible LED signal modulation, radio frequency (RF), or the like to transmit a control signal CS.

Further, the control signal receiver 130 may output a PWM signal and in this case, the control signal converter 120 converts a PWM signal into an analog voltage value to output the analog voltage value as a dimming control signal DS.

### LED Module Driving Principle

Meanwhile, the LED module 3 included in the LED module driving device 1000 in accordance with an embodiment of the present invention includes a plurality of LED channels CH1, CH2, CH4, ..., and CHn. Here, each of the LED channels may include a single LED element or a plurality of LED elements.

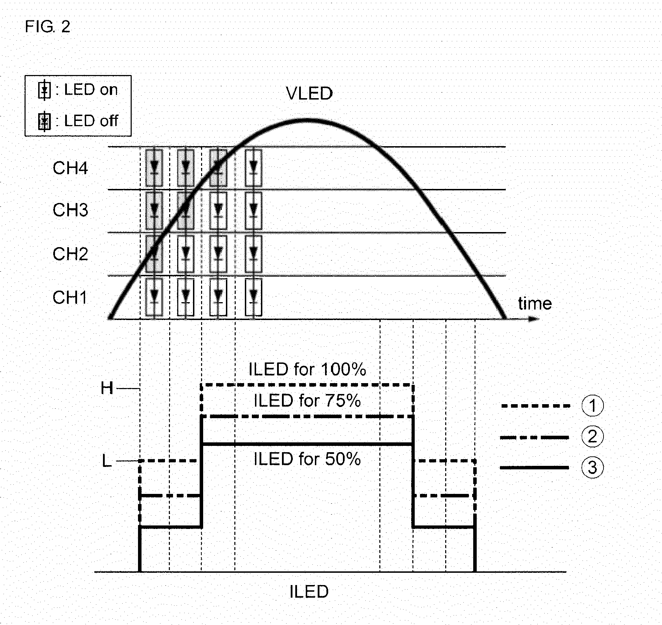

As illustrated in FIG. 2, the LED voltage VLED forms a waveform having a substantially sine-wave shape and is supplied to the LED module 3. When the LED voltage VLED is low, only a few of the LED channels are turned on and the other LED modules are turned off. On the other hand, when VLED is high, more LED channels are turned on. In other words, the number of LED channels/modules selectively activated is proportionately responsive to the VLED voltage.

For example, only a first LED channel CH1 is turned on or only the first LED channel CH1 and a second LED channel CH2 are turned on when the VLED signal is low. However, as the LED voltage VLED is increased, a larger number of LED channels are engaged, and when the LED voltage VLED reaches the maximum, all of the LED channels included in the LED module 3 are turned on. In such manner, a process, in which the number of turned-on active LED channels is increased and reduced according to the waveform of the LED voltage VLED. Such responsive actuation is repeated for each period of the LED voltage waveform VLED. As another example, when AC power having a frequency of 60 Hz is rectified by the rectification unit and is supplied to the LED module 3 through the driving unit 100, the LED voltage may have a frequency of 120 Hz. Thus, the change of the number of turned-on LED channels among the LED channels is repeated for a period of 1/240 second.

Further, the magnitude of the LED current ILED may be supplied at a plurality of levels, For example, FIG. 2 illustrates a case in which the LED current having two levels H and L is supplied from the LED module 3 including four LED channels. As illustrated in FIG. 2, the level of the LED current supplied in a state where two or less LED channels are turned on may correspond to about half of the level of the LED current ILED supplied in a state where more than two LED channels are turned on.

The LED module driving device 1000 may adjust the LED current ILED to thereby adjust brightness of the LED module 3. FIG. 2 illustrates a relationship of the sizes of the LED current ILED in cases where the brightness of the LED module 3 is adjusted to 100%, 75%, and 50%, respectively. Even though the same of number of LED channels are turned on, when the LED current is reduced, intensity of light emitted by each of the LED channels is reduced in proportion to a decrement of the LED current. That is, if it is assumed that when the LED current as indicated by the first ① (1) line of FIG. 2 is supplied, the LED module 3 has the highest brightness, when the LED current as indicated by the second ② 2) line of FIG. 2 is supplied, brightness, which is reduced by 25% as compared with the highest brightness, may be implemented, and when the LED current as indicated by the third ③ (3) line of FIG. 2 is supplied, brightness, which is reduced by 50% as compared with the highest brightness, may be implemented.

FIGS. 1 to 4 illustrate a case where the LED module 3 includes four LED channels, but the number of LED channels may be changed as necessary. Further, FIG. 2 illustrates a case where the LED current has two levels, but the levels of the LED module may also be changed, increased, or modified if necessary. Further, FIG. 2 illustrates the LED currents of the cases where the brightness of the LED module 3 is 100%, 75%, and 50%, respectively, but the brightness may not be adjusted only based on the unit of 25%, but may be adjusted by a smaller unit as necessary.

### Driver

The driver 110 supplies the power rectified by the rectification unit 2 to the LED module 3 as an LED voltage VLED and an LED current ILED and serves to adjust the LED current ILED as described above.

Further, the driver 110 may receive a dimming control signal DS and adjust the LED current ILED according to the dimming control signal DS applied to the driver 110, thereby adjusting the brightness of light emitted by the LED module 3 as described above. The dimming control signal DS may be implemented by an analog voltage value, a digital signal, or other suitable signaling scheme.

Accordingly, compared with the case where the driver 110 receives a digital signal such as a PWM signal and adjusts the LED current ILED, a total harmonic distortion (THD) phenomenon may be alleviated.

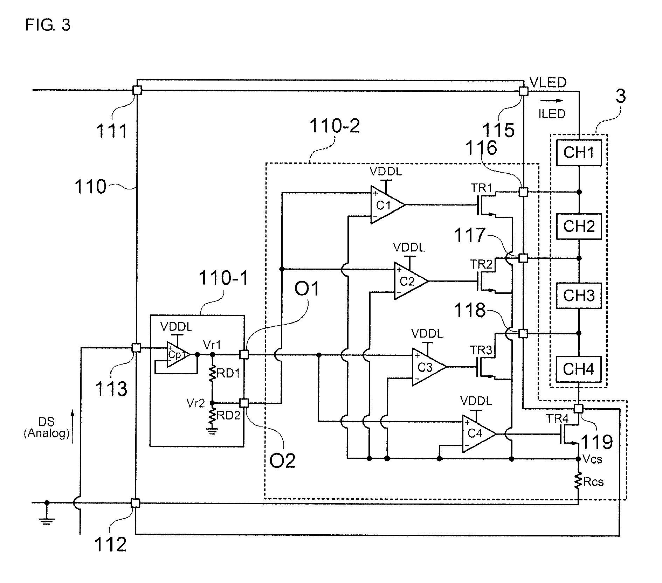

Referring to FIG. 3, in an exemplary embodiment, the driver 110 includes a first input terminal 111, a second input terminal 112, a third input terminal 113, a power output terminal 115, a plurality of channel terminals 116, 117, 118, 119, ... n, a reference voltage setting unit 110-1, and a balancing driver 110-2.

The first input terminal 111 and the second input terminal 112 are connected to the rectification unit 2. The third input terminal 113 receives a dimming control signal DS.

The power output terminal 115 is connected to one end of the LED module 3. And, the plurality of channel terminals 116-119 are connected to each of the plurality of LED channels included in the LED module 3.

The reference voltage setting unit 110-1 serves to set a reference voltage according to the dimming control signal DS. The reference voltage setting unit 110-1 is connected to the third input terminal 113 to receive the dimming control signal DS.

The balancing driver 110-2 is connected to the reference voltage setting unit 110-1 and serves to adjust the LED current ILED according to a reference voltage, thereby driving the LED module 3.

### Reference Voltage Setting Unit

Where the dimming control signal DS is an analog voltage value, if the magnitude of the analog voltage value is changed, a reference voltage set by the reference voltage setting unit 110-1 is responsively changed. Further, the reference voltage setting unit 110-1 includes a plurality of output ports O1 and 02, and each of the output ports outputs a different reference voltage. For example, a first output port O1 outputs a first reference voltage Vr1, a second output port 02 outputs a second reference voltage Vr2, in which the first reference voltage Vr1 and the reference voltage Vr2 may have different magnitudes.

The reference voltage setting unit 110-1 includes a first comparator Cp1 and a plurality of dividing resistors RD1, RD2. In this case, the dimming control signal DS is applied to a non-inverting terminal of the first comparator Cp1 and an inverting terminal of the first comparator Cp1 is connected to an output terminal. The output terminal of the first comparator Cp1 is connected to the first output port O1 to output a first reference voltage Vr1. One end of a first dividing resistor RD1 is connected to the output terminal of the first comparator Cp1 and one end of the second dividing resistor RD2 is connected to the other end of the first dividing resistor RD1. Connection nodes of the first dividing resistor RD1 and the second dividing resistor RD2 are connected to the second output port 02. Accordingly, the first reference voltage Vr1 output to the first output port O1 has a larger value than the second reference voltage Vr2 output to the second output port 02. For example, when the first dividing resistor RD1 and the second dividing resistor RD2 have the same resistance value, the first reference voltage Vr1 is twice the second reference voltage Vr2.

When the dimming control signal DS, for example, the analog voltage value constituting the dimming control signal DS is reduced, the first reference voltage Vr1 and the second reference voltage Vr2 are reduced.

In contrast, when the analog voltage value of the dimming control signal DS is increased, the first reference voltage Vr1 and the second reference voltage Vr2 are reduced.

### Connection of Driver and LED Module

In an embodiment, the LED module 3 may include a plurality of LED channels.

FIGS. 1 to 4 illustrate a case where four LED channels are provided, but the number of LED channels may be changed as necessary to suit the desired application.

Referring to FIG. 3, one end of the first LED channel CH1 is connected to the power output terminal 115 and the LED voltage VLED and the LED current ILED are applied to the first LED channel CH1. One end of the second LED channel CH2 is connected to the other end of the first LED channel CH1; one end of the third LED channel CH3 is connected to the other end of the second LED channel CH2; and one end of the fourth LED channel CH4 is connected to the other end of the third LED channel CH3. That is, the LED module 3 may be configured by connecting the plurality of LED channels in series.

The other end of the first LED channel CH1 is connected to the first channel terminal 116; the other end of the second LED channel CH2 is connected to the second channel terminal 117; the other end of the third LED channel CH3 is connected to the third channel terminal 118; and the other end of the fourth LED channel CH4 is connected to the fourth channel terminal 119.

Accordingly, the driver 110 is connected to the LED module 3 to selectively turn off or on each of the LED channels, thereby driving the LED module 3. The driver 110 adjusts the LED current ILED, thereby adjusting brightness of the LED module 3 as well.

### Balancing Driver

In an exemplary embodiment, the balancing driver 110-2 receives a reference voltage set by the reference voltage setting unit 110-1 and serves to control the LED current ILED supplied to the LED module 3. The balancing driver 110-2 includes a plurality of driving comparators, a plurality of transistors, and a sensing resistor Rcs.

Referring to FIG. 3, one end of each of the plurality of transistors (such as a drain or source) is connected to each of the plurality of channel terminals and the other end of each of the plurality of transistors is connected to one end of the sensing resistor Rcs. A control terminal or gate of each of the plurality of transistors is connected to an output terminal of each of the plurality of driving comparators. An inverting terminal of each of the plurality of driving comparators is connected to one end of the sensing resistor Rcs. A non-inverting terminal of each of the plurality of driving comparators is connected to the reference voltage setting unit 110-1 to receive a reference voltage.

One end of the first transistor TR1 is connected to the first channel terminal 116, the other end thereof is connected to one end of the sensing resistor Rcs, and a control terminal thereof is connected to an output terminal of the first driving comparator C1.

One end of the second transistor TR2 is connected to the second channel terminal 117, the other end thereof is connected to one end of the sensing resistor Rcs, and a control terminal thereof is connected to an output terminal of the second driving comparator C2.

One end of the third transistor TR3 is connected to the third channel terminal 118, the other end thereof is connected to one end of the sensing resistor Rcs, and a control terminal thereof is connected to an output terminal of the third driving comparator C3.

One end of the fourth transistor TR4 is connected to the fourth channel terminal 119, the other end thereof is connected to one end of the sensing resistor Rcs, and a control terminal thereof is connected to an output terminal of the fourth driving comparator C4.

Non-inverting terminals of the first driving comparator C1 and the second driving comparator C2 are connected to a second output port 02 of the reference voltage setting unit 110-1 to receive the second reference voltage Vr2. Non-inverting terminals of the third driving comparator C3 and the fourth driving comparator C4 are connected to the first output port O1 of the reference voltage setting unit 110-1 to receive the first reference voltage Vr1. If it is assumed that the resistance values of the first dividing resistor RD1 and the second dividing resistor RD2 are the same, the first reference voltage Vr1 is twice the second reference voltage Vr2. There is a predetermined offset between a reference level of the first driving comparator C1 and a reference level of the second driving comparator C2; and there is a predetermined offset between a reference level of the third driving comparator C3 and a reference level of the fourth driving comparator C4. For example, when the first reference voltage is 1 V and the offset is about 5%, the first driving comparator C1, the second driving comparator C2, the third driving comparator C3, and the fourth driving comparator C4 have reference levels of 0.45 V, 0.5 V, 0.95 V, and 1.0 V, respectively.

Inverting terminals of the first driving comparator C1, the second driving comparator C2, the third driving comparator C3, and the fourth driving comparator C4 are connected to the sensing resistor Rcs.

When the LED voltage VLED as illustrated in FIG. 2 starts to be applied to the LED module 3 through the power output terminal 115, since a voltage value Vcs of one end of the sensing resistor Rcs is smaller than the first reference voltage Vr1 at an initial stage, all of the first to fourth driving comparators C1 to C4 output an H signal, and as a result, all the first to fourth transistors TR1 to TR4 are turned on.

As the LED voltage VLED is increased according to the waveform of the sine wave with time, the first LED channel CH1 is turned on, and the current passing through the first LED channel CH1 flows to a ground terminal through the sensing resistor Rcs via the first transistor TR1 which is turned on. The voltage value Vcs of one end of the sensing resistor Rcs is applied to the inverting terminal of the first driving comparator C1.

As the LED voltage VLED continues to increase, the voltage value applied to the inverting terminal of the first driving comparator C1 is increased. When the voltage value is equal to or more than the reference level (for example, a reference level of the second reference voltage Vr2, 0.45 V, to which the aforementioned offset is reflected) of the first driving comparator C1, the first transistor TR1 is turned off. In such manner, when the first transistor TR1 is turned off, the current passing through the first LED channel CH1 flows to the second LED channel CH2, thereby turning on the second LED channel CH2. And, the current passing through the second LED channel CH2 flows to the ground terminal through the sensing resistor Rcs via the second transistor TR2 which is turned on. Here, the voltage value Vcs of one end of the sensing resistor Rcs is applied to the inverting terminal of the second driving comparator C2.

In such manner, when the LED current ILED is balanced, the LED current ILED at a low level illustrated in FIG. 2 may be maintained.

As the LED voltage VLED continues to increase, a voltage value applied to the inverting terminal of the second driving comparator C2 is increased. When the voltage value is larger than the reference level (for example, the second reference voltage Vr2, 0.5 V) of the second driving comparator C2, the second transistor TR2 is turned off. In such manner, when the second transistor TR2 is turned off, the current passing through the second LED channel CH2 flows to the third LED channel CH3, and thus the third LED channel CH3 is turned on. The current passing through the third LED channel CH3 flows to the ground terminal through the sensing resistor Rcs via the third transistor TR3 which is turned on. A voltage value of one end of the sensing resistor Rcs is applied to the inverting terminal of the third driving comparator C3.

As the LED voltage VLED continues to increase, a voltage value applied to the inverting terminal of the third driving comparator C3 is increased. When the voltage value is larger than the reference level (for example, a reference level of the first reference voltage Vr1 to which the aforementioned offset is reflected, 0.95 V) of the third driving comparator C3, the third transistor TR3 is turned off. In such manner, when the third transistor TR3 is turned off, the current passing through the third LED channel CH3 flows to the fourth LED channel CH4, such that the fourth LED channel CH4 is turned on. The current passing through the fourth LED channel CH4 flows to the ground terminal through the sensing resistor Rcs via the fourth transistor TR4 which is turned on. Here, the voltage value of the one end of the sensing resistor Rcs is applied to the inverting terminal of the fourth driving comparator C4.

When the LED current is balanced, the LED current ILED at a high level illustrated in FIG. 2 may be maintained.

### Brightness Adjustment of LED Module

Through the above description, it will be understood that the LED current ILED may be determined and the LED module 3 may be driven by the first reference voltage Vr1 and the second reference voltage Vr2 set by the reference voltage setting unit 110-1. Further, it will be understood that the reference voltage setting unit 110-1 may change the magnitude of the first reference voltage Vr1 and the second reference voltage Vr2 according to the dimming control signal DS. For example, when the voltage value applied to the non-inverting terminal of the first comparator Cp1 is reduced according to the dimming control signal DS, the first reference voltage Vr1 and the second reference voltage Vr2 are reduced, and in an opposite case, the first reference voltage Vr1 and the second reference voltage Vr2 are increased.

As described above, the driving unit 100 of the LED module driving device 1000 in accordance with an embodiment of the present invention includes the control signal receiver 130.

A command for adjusting the brightness of the LED module 3 may be received from a user, responsive to sensors, or time, or the like through various types of control signal generation devices 2000, and the control signal receiver 130 may receive a control signal CS from the control signal generation device 2000 through wired communication or wireless communication. The control signal receiver 130 receiving a control signal CS including the command for adjusting the brightness may directly output the dimming control signal SD in a form of an analog signal or output the dimming control signal SD in a form of a PWM signal.

Accordingly, the command for adjusting the brightness of the LED module 3 may be reflected to the LED module driving device 1000.

### Control Signal Receiver

As the control signal generation device, a mobile device 2100, such as a smart phone or a tablet PC, a server 2300 connected to a gateway 2200, various sensors 2400, a sink & source dimmer 2500, and the like may be applied.

The control signal receiver 130 includes at least one of a wireless module WM and a line module LM. Here, the wireless module WM may be a WiFi module implementing for example IEEE 802.11 a/b/g/n, a Zigbee module implementing IEEE 802.15.4, a Bluetooth module implementing IEEE 802.15.1, or the like.

Accordingly, when the control signal generation device 2000 positioned to be spaced apart from the control signal receiver 130 and the control signal receiver 130 are connected to the same gateway 2200, the control signal generation device 2000 may adjust the amount of light emitted by the LED module 3 in addition to an operation such as the turn-on and the turn-off, color change, or applying various strobing patterns of the LED module 3.

The control signal receiver 130 may be connected to a separate control unit implemented by a software construction. Accordingly, even though the user does not directly input the command, the turn-on, the turn-off, and the brightness of the LED module 3 may be controlled based on a predetermined schedule and the like. For example, after midnight, the brightness of the LED module 3 may be reduced or the LED module 3 may be turned off.

The gateway 2200 connected with the control signal receiver 130 may be connected to a web-based server 2300, and in this case, remote control of the LED module driving device 1000 may be possible by various terminals connected to the web-based server 2300.

An output value of the control signal receiver 130 may be a PWM type signal. In this case, a control signal converter 120 may be provided between an output terminal of the control signal receiver 130 and the driver 110. Here, the control signal converter 120 receives a PWM signal to convert the PWM signal into an analog voltage value. As described above, when the PWM signal is directly applied to the driver 110, a total harmonic distortion problem may be aggravated, and the control signal converter 120 is provided to thereby relatively alleviate the total harmonic distortion problem.

### Linear Circuit

The control signal receiver 130 is supplied with driving power thereof within the LED module driving device 1000. In particular, power required for driving the control signal receiver 130 may be supplied by the linear circuit 140 included in the driving unit 1000. An AC power output from the power supply unit 1 is output in a rectified state by a rectification unit 2, and the linear circuit 140 may directly receive the output of the rectification unit 2 to convert the output of the rectification unit 2 into DC power or output DC power by using a bias voltage Vb supplied by the bias unit 150 illustrated in FIG. 1.

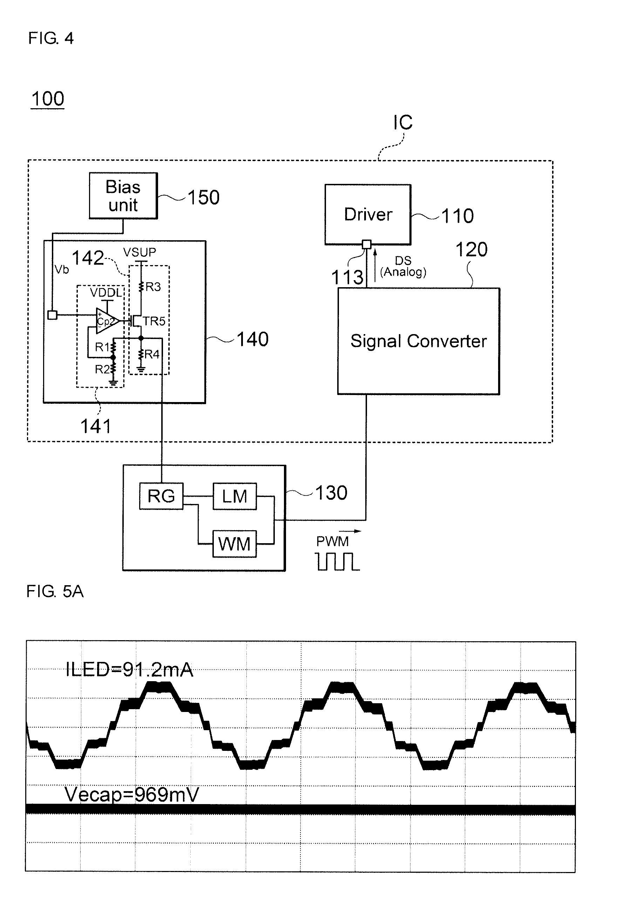

Referring to FIG. 4, the linear circuit 140 includes a comparator Cp2 coupled to a control or gate terminal of transistor TR5, and a plurality of resistors R1, R2, R3, and R4.

A power supply VSUP is connected to one end of the fifth transistor TR5; one end of the fourth resistor R4 is connected to the other end of the fifth transistor TR5, and the other end of the fourth resistor R4 is grounded. A third resistor R3 may be provided between the fifth transistor TR5 and the power supply terminal VSUP. An output terminal of the second comparator Cp2 is connected to a control terminal of the fifth transistor TR5.

A bias voltage Vb supplied by the bias unit 150 is applied to the non-inverting terminal of the second comparator Cp2. A node between a first resistor R1 having one end connected to the other end of the fifth transistor TR5 and a second resistor R2 connected to the other end of the first resistor R1 is connected to the inverting terminal of the second comparator Cp2. Accordingly, DC power is generated at one end of the fourth resistor R4 and the DC power may be supplied to the control signal receiver 130.

When there is an excessive difference between a voltage value of DC power output from the linear circuit 140 and a voltage value for driving a wireless module WM or a line module LM, a separate regulator RG is provided to reduce the difference between the voltage values. The regulator RG is included in the control signal receiver 130 coupled intermediately between the DC power output from the linear circuit 140 and the line module LM and/or wireless module WM.

Accordingly, power may be supplied to the control signal receiver 130 without a separate AC/DC converter or DC/DC converter, and as a result, there is no need to install an EMI filter, a PFC or the like in the LED module driving device 1000, which is advantageous in terms of miniaturization and reduction of manufacturing costs.

At least two of the driver 110, the linear circuit 140, the control signal converter 120, and the bias unit 150 may be implemented inside a single integrated circuit (IC). In this example, the control signal receiver 130 may be implemented outside the IC.

The control signal receiver 130 may include only the wireless module WM or only the line module LM or both, and an operation detecting sensor, a timer, or an illumination sensor may be directly mounted in the control signal receiver 130. As described above, the control signal receiver 130 is set to have a wide range of specifications, such that an LED module driving device 1000 with many different configurations may be manufactured and sold. Where various specifications of ICs are manufactured, manufacturing efficiency may be reduced. For this reason, as many elements as possible may be mounted in the IC. Therefore, ICs are manufactured with the same specification having no difference between models and the control signal receiver 130 is configured such that specifications thereof are diversified and compatible with a single type of IC, thereby efficiently manufacturing products with specifications to meet the demands of consumers.

However, in the case of the linear circuit 140, the fifth transistor TR5 may be implemented by a field effect transistor (FET) and in this case, a substantial amount of heat may be generated from the fifth transistor TR5 according to an operation of the linear circuit 140. Therefore, an element 142 including the fifth transistor TR5, the third resistor R3, and the fourth resistor R4 may be implemented outside the IC and an element 141 including the second comparator Cp2, the first resistor R1, and the second resistor R3 may be implemented inside the IC, thereby relieving the heat generation problem of the IC.

The sensing resistor Rcs of the driver 110 may also be implemented outside the IC, thereby contributing to miniaturization of the IC.

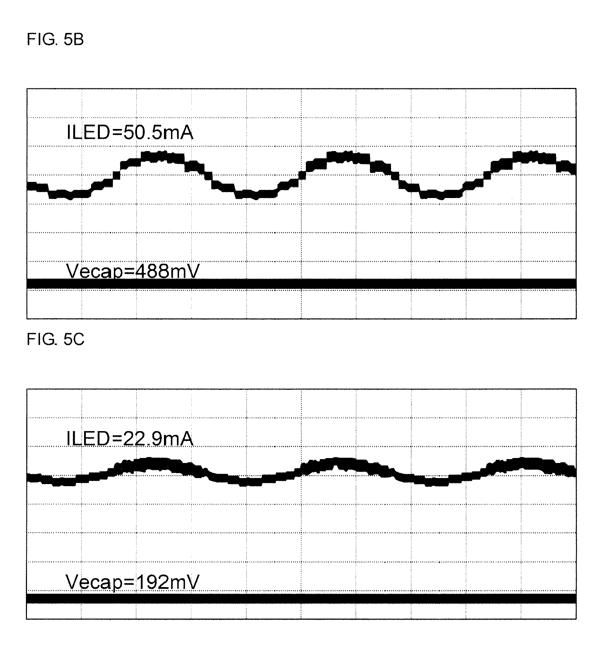

FIG. 5 is a diagram illustrating a change of the LED current and illustrates an LED current waveform according to a duty ratio of the PWM signal output from the control signal receiver 130. For example, FIGS. 5A, 5B, and 5C illustrate LED current waveforms in a case where a PWM signal having a duty ratio of 100% is output from the control signal receiver 130, in a case where a PWM signal having a duty ratio of 50% is output from the control signal receiver 130, and in a case where a PWM signal having a duty ratio of 20% is output from the control signal receiver 130, respectively.

As illustrated in FIG. 5, as the duty ratio of the PWM signal is reduced, the maximum value of the LED current may be reduced, and as a result, brightness of the LED module 3 receiving the LED current may also be reduced.

The following Table 1 shows a relationship between an effective value of the LED current and a brightness value according to the duty ratio of the PWM signal output from the control signal receiver 130 in the LED module driving device 1000.

**[Table 1]**

| Duty [%] | ILED rms [mA] | Dimming ratio [%] |
|---|---|---|
| 100 | 89.0 | 100 |
| 80 | 73.4 | 82 |
| 70 | 65.4 | 73 |
| 60 | 56.5 | 63 |
| 50 | 47.8 | 54 |
| 40 | 39.4 | 44 |
| 30 | 30.2 | 34 |
| 20 | 21.0 | 24 |
| 10 | 11.0 | 12 |
| 0 | 3.8 | 4 |

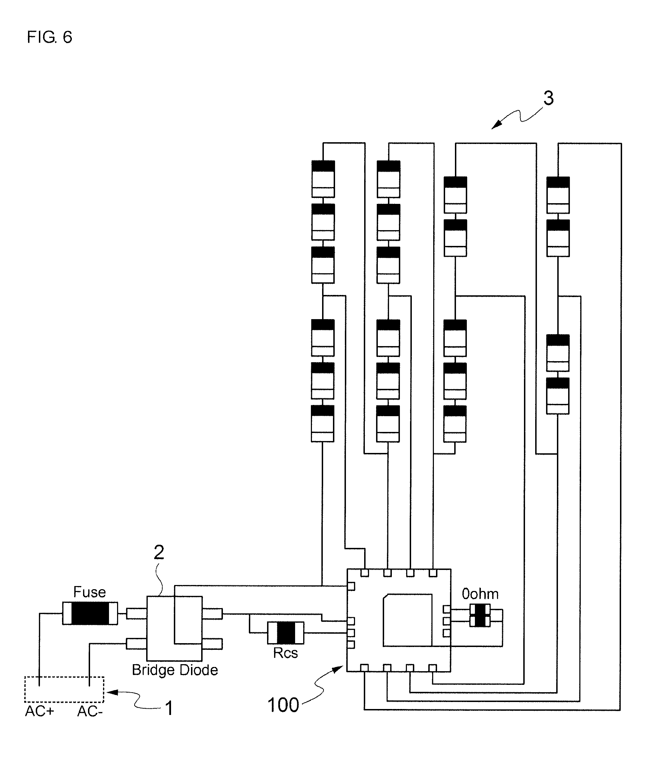

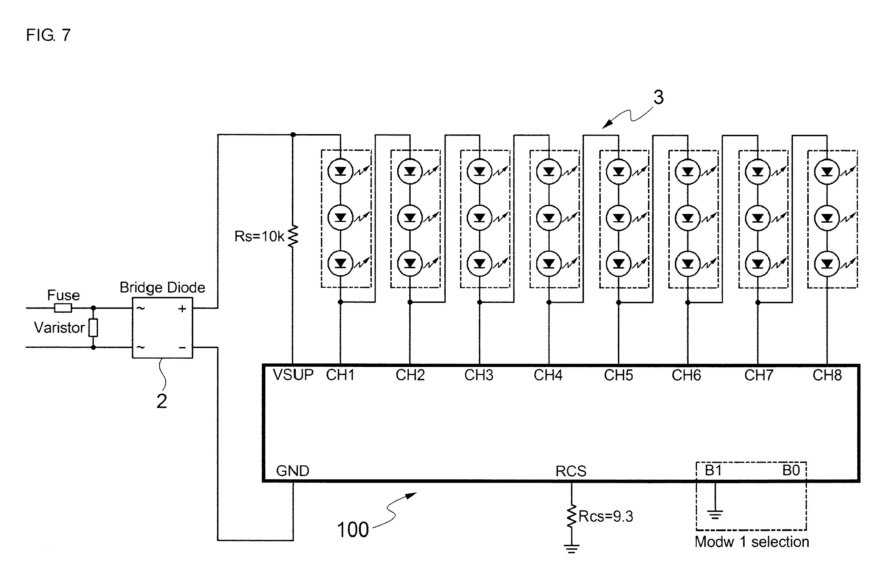

FIGS. 6 and 7 schematically illustrate an example in which a rectification unit 2 is implemented by a bridge diode, a driving unit 100 including a driver and the like is implemented by a single IC, and an LED module 3 is implemented by connecting LEDs, which vary in number, in series and/or in parallel.

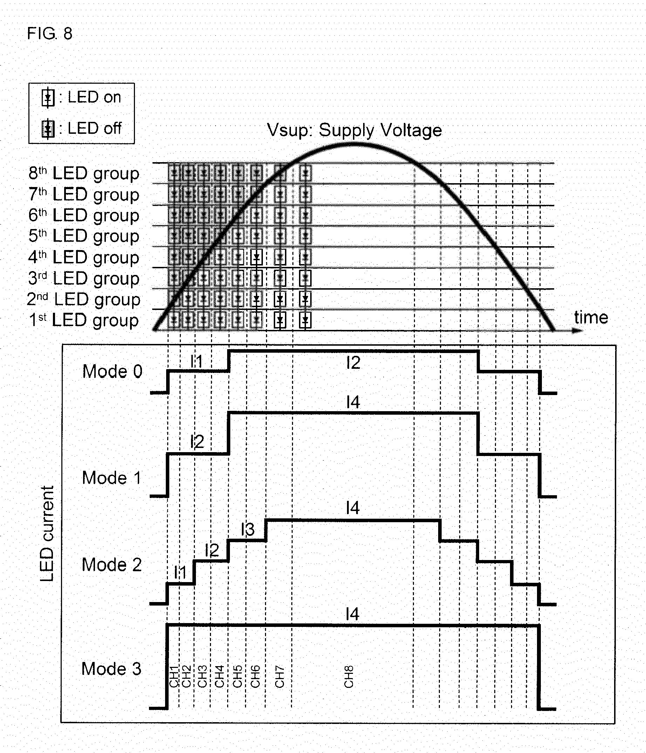

FIG. 8 illustrates a principle that LED channels constituting an LED module are sequentially turned on according to the LED voltage when the LED module includes eight LED channels, and various modes for supplying an LED current.

Even though the LED module driving device as described above is an illumination device driven by an AC direct method, natural adjust brightness is possible. In particular, due to the characteristics of the AC direct type illumination device, when only some of the plurality of channels are selectively turned on to adjust the brightness, the flicker becomes so severe that a person may visually recognize the flicker, which may make his/her eyes feel tired easily and cause unpleasantness. The exemplary apparatus and method described may reduce unnatural flicker when brightness is adjusted.

The apparatuses, units, modules, devices, and other components such as command receiver 130, control signal converter 120, driver 110, gateway 2200, and device 2100 illustrated in FIGS. 1, 3-4, 6-7 that perform the operations described herein with respect to FIGS. 2 and 5A-5C are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 2 and 5A-5C. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in the FIGS. that perform the operations described herein may be performed by a processor or a computer as described above executing instructions or software to perform the operations described herein.

Instructions or software to control a processor or computer to implement the hardware components and perform the methods as described above may be written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

As a non-exhaustive example only, a terminal/device/unit 2000 as described herein may be a mobile device, such as a cellular phone, a smart phone, a wearable smart device (such as a ring, a watch, a pair of glasses, a bracelet, an ankle bracelet, a belt, a necklace, an earring, a headband, a helmet, or a device embedded in clothing), a portable personal computer (PC) (such as a laptop, a notebook, a subnotebook, a netbook, or an ultra-mobile PC (UMPC), a tablet PC (tablet), a phablet, a personal digital assistant (PDA), a digital camera, a portable game console, an MP3 player, a portable/personal multimedia player (PMP), a handheld e-book, a global positioning system (GPS) navigation device, or a sensor, or a stationary device, such as a desktop PC, a high-definition television (HDTV), a DVD player, a Blu-ray player, a set-top box, or a home appliance, or any other mobile or stationary device capable of wireless or network communication. In one example, a wearable device is a device that is designed to be mountable directly on the body of the user, such as a pair of glasses or a bracelet. In another example, a wearable device is any device that is mounted on the body of the user using an attaching device, such as a smart phone or a tablet attached to the arm of a user using an armband, or hung around the neck of the user using a lanyard.

A computing system or a computer may include a microprocessor that is electrically connected to a bus, a user interface, and a memory controller, and may further include a flash memory device. The flash memory device may store N-bit data via the memory controller. The N-bit data may be data that has been processed and/or is to be processed by the microprocessor, and N may be an integer equal to or greater than 1. If the computing system or computer is a mobile device, a battery may be provided to supply power to operate the computing system or computer. It will be apparent to one of ordinary skill in the art that the computing system or computer may further include an application chipset, a camera image processor, a mobile Dynamic Random Access Memory (DRAM), or any other device known to one of ordinary skill in the art as being suitable for inclusion in a computing system or computer. The memory controller and the flash memory device may constitute a solid-state drive or disk (SSD) that uses non-volatile memory to store data.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A device for driving a light emitting diode (LED) module directly by an alternating current (AC), wherein AC power is rectified to be applied to the LED module and a brightness of the LED module is adjusted by adjusting a maximum value of an LED current passing through the LED module.

2. The device for driving an LED module according to claim 1, comprising: a driving unit for receiving a control signal determining an on, an off, and/or a brightness state of the LED module through wired communication or wireless communication and adjusting the LED current according to the control signal.

3. The device for driving an LED module according to claim 2, wherein the driving unit comprises: a control signal receiver configured to receive the control signal; and a driver configured to adjust the LED current according to a dimming control signal according to the control signal.

4. The device for driving an LED module according to claim 3, wherein the control signal receiver outputs a pulse width modulation (PWM) signal and the driving unit further comprises a control signal converter for converting the PWM signal into an analog voltage value, and the dimming control signal includes the analog voltage value.

5. The device for driving an LED module according to claim 4, wherein the driving unit further comprises a linear circuit configured to supply power for driving the control signal receiver.

6. The device for driving an LED module according to claim 5, wherein the linear circuit is configured to convert the power of the driving unit into DC power and supply the DC power to the control signal receiver.

7. The device for driving an LED module according to claim 6, wherein the driver, the linear circuit, and the control signal converter are provided in a single integrated circuit and the control signal receiver is provided outside the integrated circuit.

8. The device for driving an LED module according to claim 7, wherein the driving unit further comprises a bias unit for supplying a bias voltage to the linear circuit, wherein the bias unit is provided in the integrated circuit.

9. The device for driving an LED module according to claim 6, wherein the driving unit further comprises a bias unit for supplying a bias voltage to the linear circuit.

10. The device for driving an LED module according to claim 4, wherein the driving unit further comprises a linear circuit for supplying power for driving the control signal receiver.

11. A device for driving a light emitting diode (LED) module comprising:
a power supply unit configured to supply alternating current (AC) power;
a rectification unit connected to the power supply unit configured to rectify the AC power; and
a driving unit connected to the rectification unit configured to supply an LED voltage and an LED current to an LED module, wherein the driving unit receives a command related to brightness of the LED module to adjust the brightness of the LED module responsive to the command.

12. The device for driving an LED module according to claim 11, wherein the driving unit comprises a driver configured to adjust the brightness of the LED module by adjusting the maximum value of the LED current.

13. The device for driving an LED module according to claim 12, wherein the driver comprises: a reference voltage setting unit configured to generate a reference voltage adaptively varied according to a command related to the brightness of the LED module; and a balancing driver connected to the LED module, the reference voltage setting unit being configured to adjust the LED current according to the reference voltage.

14. The device for driving an LED module according to claim 13, wherein the reference voltage setting unit is configured to receive a dimming control signal adaptively varied according to a command related to the brightness of the LED module and output a plurality of reference voltages having different values, respectively.

15. The device for driving an LED module according to claim 14, wherein the reference voltage setting unit comprises: a first comparator having a first terminal configured to receive the dimming control signal and an output terminal connected to a second terminal; a first dividing resistor having one end connected to the output terminal of the first comparator; and a second dividing resistor having one end connected to the other end of the first dividing resistor.

16. The device for driving an LED module according to claim 15, wherein the LED module comprises a plurality of LED channels which are connected to each other in series and the balancing driver comprises: at least one first driving comparator having a first terminal connected to the other end of the first dividing resistor; at least one second driving comparator having a first terminal connected to an output terminal of the first comparator; a first transistor having a control terminal connected with an output terminal of the first driving comparator, a first terminal connected to an output terminal of an LED channel which is selected from the plurality of LED channels, and a second terminal connected to one end of a sensing resistor; and a second transistor having a control terminal connected with an output terminal of the second driving comparator, a first terminal connected to an output terminal of another LED channel which is selected from the plurality of LED channels, and a second terminal connected to one end of a sensing resistor.

17. The device for driving an LED module according to claim 14, wherein the LED module comprises a plurality of LED channels which are connected to each other in series and the balancing driver comprises a plurality of driving comparators, a plurality of transistors, and a sensing resistor.

18. The device for driving an LED module according to claim 12, wherein the driving unit further comprises a control signal receiver configured to receive a control signal including a command related to brightness of the LED module.

19. The device for driving an LED module according to claim 18, wherein the control signal receiver is configured to output a pulse width modulation (PWM) signal by receiving the control signal in a wired communication or wireless communication manner and the driving unit further comprises a control signal converter configured to convert the PWM signal into a dimming control signal.

20. The device for driving an LED module according to claim 18, wherein the driving unit further comprises a linear circuit configured to supply power for driving the control signal receiver.

21. The device for driving an LED module according to claim 20, wherein the linear circuit comprises: a transistor having a first terminal receiving power and a second terminal connected to one end of a first resistor; a comparator having a first terminal receiving a bias voltage and an output terminal connected to a control terminal of the transistor; a second resistor having one end connected to a second terminal of the transistor; and a third resistor having one end connected to the other end of the second resistor, wherein the other end of the second resistor is connected to a second terminal of the comparator.

22. The device for driving an LED module according to claim 21, wherein at least one of the comparator of the linear circuit, the second resistor, and the third resistor is provided in a single integrated circuit with the driver, the transistor and the first resistor are provided outside the integrated circuit, and the control signal receiver is provided outside the integrated circuit.

23. A device for driving a light emitting diode (LED) module comprising:
an LED module including a first LED channel, a second LED channel, a third LED channel, and a fourth LED channel which are connected to each other in series and configured to receive an LED voltage and an LED current at one end of the first LED channel; and
a driver for receiving a dimming control signal and adjusting the LED current to adjust brightness of the LED module, wherein the dimming control signal is an analog voltage value in proportion to the brightness of the LED module.

24. The device for driving an LED module according to claim 23, further comprising:
a control signal receiver configured to receive a control signal including a command related to brightness of the LED module and outputting a pulse width modulation (PWM) signal; and
a control signal converter for converting the PWM signal into the dimming control signal.

25. The device for driving an LED module according to claim 24, wherein the driver comprises: a reference voltage setting unit configured to receive the dimming control signal and outputting a plurality of reference voltages; and a balancing driver connected to the LED module and the reference voltage setting unit to adjust the LED current according to the plurality of reference voltages, wherein the sizes of the plurality of reference voltages are different from each other and proportionate to the size of the dimming control signal.

26. The device for driving an LED module according to claim 25, wherein the balancing driver comprises: a sensing resistor having one end connected to the fourth LED channel and the other end grounded; a first transistor having a first terminal connected to the other end of the first LED channel; a second transistor having a first terminal connected to the other end of the second LED channel; a third transistor having a first terminal connected to the other end of the third LED channel; a fourth transistor having a first terminal connected to the other end of the fourth LED channel; a first driving comparator having an output terminal connected to the first transistor; a second driving comparator having an output terminal connected to the second transistor; a third driving comparator having an output terminal connected to the third transistor; and a fourth driving comparator having an output terminal connected to the fourth transistor, wherein second terminals of the first transistor, the second transistor, the third transistor, and the fourth transistor are connected to one end of the sensing resistor, inverting terminals of the first driving comparator, the second driving comparator, the third driving comparator, and the fourth driving comparator are connected to one end of the sensing resistor, and non-inverting terminals of the first driving comparator, the second driving comparator, the third driving comparator, the fourth driving comparator receive one of the plurality of reference voltages.

27. The device for driving an LED module according to claim 26, wherein the reference voltage setting unit comprises: a first comparator having a first terminal receiving the dimming control signal and an output terminal connected to a second terminal; a first dividing resistor having one end connected to the output terminal of the first comparator; and a second dividing resistor having one end connected to the other end of the first dividing resistor, wherein non-inverting terminals of the first driving comparator and the second driving comparator are connected to one end of the second dividing resistor, and non-inverting terminals of the third driving comparator and the fourth driving comparator are connected to an output terminal of the first comparator.

28. The device for driving an LED module according to claim 25, wherein the reference voltage setting unit comprises: a first comparator having a first terminal receiving the dimming control signal and an output terminal connected to a second terminal; a first dividing resistor having one end connected to the output terminal of the first comparator; and a second dividing resistor having one end connected to the other end of the first dividing resistor.

29. The device for driving an LED module according to claim 28, wherein the balancing driver comprises: a sensing resistor having one end connected to the fourth LED channel and the other end grounded; a first transistor having a first terminal connected to the other end of the first LED channel; a second transistor having a first terminal connected to the other end of the second LED channel; a third transistor having a first terminal connected to the other end of the third LED channel; a fourth transistor having a first terminal connected to the other end of the fourth LED channel; a first driving comparator having an output terminal connected to the first transistor; a second driving comparator having an output terminal connected to the second transistor; a third driving comparator having an output terminal connected to the third transistor; and a fourth driving comparator having an output terminal connected to the fourth transistor, wherein second terminals of the first transistor, the second transistor, the third transistor, and the fourth transistor are connected to one end of the sensing resistor, inverting terminals of the first driving comparator, the second driving comparator, the third driving comparator, and the fourth driving comparator are connected to one end of the sensing resistor, and non-inverting terminals of the first driving comparator and the second driving comparator are connected to one end of the second dividing resistor, and non-inverting terminals of the third driving comparator and the fourth driving comparator are connected to an output terminal of the first comparator.

30. The device for driving an LED module according to claim 25, further comprising:
a linear circuit which supplies power for driving the control signal receiver, wherein the linear circuit comprises: a transistor having a first terminal receiving power and a second terminal connected to one end of a first resistor; a comparator having a first terminal receiving a bias voltage and an output terminal connected to a control terminal of the transistor; a second resistor having one end connected to a second terminal of the transistor; and a third resistor having one end connected to the other end of the second resistor, wherein the other end of the second resistor is connected to a second terminal of the comparator.

31. The device for driving an LED module according to claim 30, wherein the driver, the control signal converter, and the linear circuit are provided in one integrated circuit and the control signal receiver is provided outside the integrated circuit.

32. The device for driving an LED module according to claim 31, wherein the transistor of the linear circuit is provided outside the integrated circuit.

33. A method for driving a light emitting diode (LED) module directly by an alternating current (AC), wherein AC power is rectified and applied to an LED module, wherein brightness of the LED module is adjusted by adjusting the maximum value of an LED current passing through the LED module.

34. The method for driving an LED module according to claim 33, comprising:
receiving a control signal including a command related to brightness of the LED module and outputting the control signal as a pulse width modulation (PWM) signal;
converting the PWM signal into an analog voltage value; and
adjusting the maximum value of the LED current so as to be proportionate to the analog voltage value.

35. The method for driving an LED module using the device for driving an LED module according to claim 32, the method comprising:
receiving a control signal including a command related to brightness of the LED module and outputting the control signal as a PWM signal;
converting the PWM signal into an analog voltage value; and
adjusting the maximum value of the LED current so as to be proportionate to the analog voltage value.

36. A method for directly driving a light emitting diode (LED) module with alternating current (AC), the method comprising:
establishing an AC power supply coupled via a rectifier to an LED module, the LED module including a plurality of selectively addressable LEDs;
rectifying an AC power according to a predetermined frequency;
supplying the rectified AC power to the LED module; and,
selectively actuating a predetermined number of the LEDs in the LED module according to a magnitude of the voltage of the AC power.

37. The method for directly driving an LED module according to claim 36, further comprising adaptively modulating a current supplied to the LED module to control a brightness of the LEDs.

38. The device for driving an LED module according to claim 1, wherein the AC power is operationally coupled to the LED module without a transformer, a power factor corrector, or measures for electromagnetic interference (EMI) remediation coupled therebetween.
